(19) Europäisches Patentamt
European Patent Office
Office européen des brevets

(11) Veröffentlichungsnummer: **0 350 600 B1**

(12) **EUROPÄISCHE PATENTSCHRIFT**

(45) Veröffentlichungstag der Patentschrift: **12.07.95**

(51) Int. Cl.$^6$: **C07F 7/18**, C08K 5/54, C08L 21/00

(21) Anmeldenummer: **89109122.5**

(22) Anmeldetag: **20.05.89**

Teilanmeldung 94113757.2 eingereicht am 20/05/89.

# (54) Verfahren zur Herstellung von reinen 3-Butenyltriorganyloxysilanen.

(30) Priorität: **11.07.88 DE 3823450**

(43) Veröffentlichungstag der Anmeldung: **17.01.90 Patentblatt 90/03**

(45) Bekanntmachung des Hinweises auf die Patenterteilung: **12.07.95 Patentblatt 95/28**

(84) Benannte Vertragsstaaten: **BE DE ES FR GB IT LU NL**

(56) Entgegenhaltungen:
**EP-A- 0 332 969**
**EP-A- 0 332 970**
**US-A- 3 907 850**
**US-A- 4 658 050**

**DATABASE CHEMICAL ABSTRACTS, (HOST: STN), Band 92, Nr. 10, 1979,Zusammenfassung Nr. 77738d, Columbus, Ohio,US; P. VONDRACEK et al.: "Funtions ofunsaturated silanes in rubber blends",& EKT, ELEKTROIZOLACNA KABLOVATECH., 32(1), 17-24**

(73) Patentinhaber: **Degussa Aktiengesellschaft**
**Weissfrauenstrasse 9**
**D-60311 Frankfurt (DE)**

(72) Erfinder: **Deschler, Ulrich, Dr.**
**Birkenweg 1**
**D-6450 Hanau 9 (DE)**
Erfinder: **Kleinschmit, Peter, Dr.**
**Wildaustrasse 19**
**D-6450 Hanau 9 (DE)**
Erfinder: **Wolff, Siegfried, Dr.**
**Weiherstrasse 28**
**D-5303 Bornheim-Merten (DE)**
Erfinder: **Tan, Ewe-Hong**
**Rembrandtstrasse 22**
**D-5047 Wesseling (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur Herstellung von reinen 3-Butenyltriorganyloxysilanen.

Die Herstellung eines solchen Butenyltriorganyloxysilans wird von Capka et al. in Collect. Czech. Chem. Commun. 1976, 41 (4) 1024-9 (C.A. 85:78183m (1976)) beschrieben, allerdings mit dem Hinweis, daß die Anlagerung von $(C_2H_5O)_3SiH$ an 1,3-Butadien nicht selektiv verläuft.

Diesselbe Problematik wird auch in C.A. 87:152308r (1977) abgehandelt. Nach diesem Zitat erhält man $(C_2H_5O)_3Si-CH_2-CH_2-CH=CH_2$ durch Hydrosilylierung von 1,3-Butadien mit $(C_2H_5O)_3SiH$ in allerdings nur sehr geringer Ausbeute neben zwei als Hauptprodukte erhaltenen, bezüglich der C-C-Doppelbindung stellungsisomeren Butenylsilanen. Dies wird durch das tschechoslowakische Patent 171 597 vom 15. 02. 1978 (C.A. 89:215545e (1978)) bestätigt, dem man auch die Eignung der Titelverbindung zur Verbesserung der Haftung zwischen organischen Polymeren und anorganischen Füllstoffen entnehmen kann.

Die Verwendung der Titelverbindungen in Emulsionen zur Vorbehandlung von Glasfasern wird in der tschechoslowakischen Patentschrift 221 181 B (C.A. 105:25289a (1986)) vom 15. 03. 1986 beschreiben. Ein Verfahren zur Herstellung kann man dieser Druckschrift nicht entnehmen.

E. Lukevics et al., J. Organomet. Chem. Libr., 5 (1977) 26, beschreiben die Trichlorsilananlagerung an 1,3-Butadien, bei der die aus der 1,2-Addition erwartete Verbindung $Cl_3Si-CH_2-CH_2-CH=CH_2$ nur in gerigem Maße gebildet wird, weil auch die 1,4-Addition mit Verschiebung der Doppelbindung, die doppelte Silylierung und die Telomerisation in Kauf genommen werden müssen. Bei einer nachfolgenden Veresterung der Trichlorsilylfunktion mit Alkoholen zum gewünschten Produkt gemäß Formel (I) ergibt sich dann zudem die Gefahr, daß der dabei freigesetzte Chlorwasserstoff an die verbliebene Doppelbindung addiert wird.

Aufgabe der Erfindung ist deshalb ein Verfahren zur selektiven Herstellung von reinen, hydrolysierbaren Butenylsilanen mit endständiger C-C-Doppelbindung. Endständige C-C-Doppelbindungen lassen wegen der bekannten, durch einen geringeren sterischen Anspruch erklärbaren, höheren Reaktivität im Vergleich zu mittelständigen C-C-Doppelbindungen Vorteile in der Anwendung erwarten, wie z. B. schnellere Vernetzung durch Peroxide oder raschere Copolymerisation mit anderen Monomeren. Gegenstand der Erfindung ist ein Verfahren zur Herstellung von reinen, d. h. isomerenfreien 3-Butenyltriorganyloxysilanen der allgemeinen Formel

$$(RO)_3-Si-CH_2-CH_2-CH=CH_2 \qquad (I),$$

in der bedeutet

R: $C_1$ - $C_8$ - Alkyl, Aryl, Aralkyl, insbesondere

R = $CH_3$, $C_2H_5$, $C_6H_5$,

$$C_6H_5-CH_2-,$$

das dadurch gekennzeichnet ist, daß man

a) 3,4-Dichlorbuten-1 mit Trichlorsilan hydrosilyliert,

b) das entstandene 3,4-Dichlorbutyltrichlorsilan abdestilliert,

c) diese Verbindung mit einem Alkohol der allgemeinen Formel ROH (II), in der R die oben angegebene Bedeutung hat, verestert,

d) das erhaltene 3,4-Dichlorbutyltriorganyloxysilan nach der destillativen Reinigung mit Natriummetall dehalogeniert und

d) das Produkt gemäß Formel (I) isoliert.

Die Hydrosilylierung kann man in homogener oder in heterogener Phase durchführen.

Arbeitet man in der homogenen Phase, so setzt man das Trichlorsilan und das 3,4-Dichlorbuten-1 im allgemeinen im molaren Verhältnis von 1,0 - 1,3 zu 1 in Gegenwart eines üblichen Pt-Katalysators bei Temperaturen von 25 bis 150 °C, bevorzugt 35 bis 120 °C, unter Normaldruck miteinander um.

Als homogene Katalysatoren geeignet sind vor allem Hexachloroplatinsäure, Platin-(II)-acetylacetonat oder ähnliche, aus einschlägigen Übersichtsartikeln bekannte (vgl. z. B. E. Lukevics et al., J. Organomet. Chem. Libr. 5 (1977), 3-5), in organischen Lösungsmitteln lösliche Platinverbindungen, sowie z. B. auch lösliche Komplexe der katalytisch aktiven Übergansmetalle Cobalt, Nickel, Rhodium, Palladium oder Osmium (vgl. z. B. J.L. Speier, Adv. Organomet. Chem. 17 (1979), 428).

Bei der Verwendung heterogener, d. h. im organischen Medium unlöslicher Katalysatoren wird ein Gemisch aus Trichlorsilan und 3,4-Dichlorbuten-1 im allgemeinen im molaren Verhältnis von 1,0 - 1,3 zu 1 in flüssiger Phase bei Drücken von 1-5 atm durch ein Katalysatorfestbett geleitet, das zusätzlich durch externe Beheizung auf einer bestimmten Temperatur gehalten werden kann. Die Verweilzeit der beiden Reaktionspartner in diesem Katalysatorfestbett ist so zu wählen, daß die Umsetzung zum 3,4-Dichlorbutyltrichlorsilan nach einem Durchlauf -bezogen auf 3,4-Dichlorbuten-1-praktisch vollständig ist. Als katalytisch aktive Zentren kommen vor allem Platin, aber auch z. B. Palladium, Rhodium, Osmium, Cobalt und Nickel in Frage. Geeignete unlösliche Träger können sowohl anorganischer (z. B. Kieselgel, Aluminiumoxid, Aktivkohle) als auch organischer Natur (z. B. Polystyrol/Divinylbenzol, Polymethylmethacrylat/Divinylbenzol) sein (vgl. E. Lukevics et al., J. Organomet. Chem. Libr. 5 (1977), 5-6). Für kommerziell genutzte Prozesse haben sich Platin-auf-Aktivkohle-Kontakte als heterogene Hydrosilylierungskatalysatoren besonders bewährt (z. B. US-PS 2,637,738; DE-OS 2815316).

Nach der Destillation des bei der Hydrosilylierung erhaltenen Reaktionsgemisches fällt das 3,4-Dichlorbutyltrichlorsilan als farblose, niedrigviskose Flüssigkeit an.

Die Trichlorsilylgruppe wird anschließend nach allgemein bekannten Verfahren mit den gewünschten Alkoholen, insbesondere Methanol oder Ethanol, verestert (vgl. z. B. DE-OS 2061189, GB-PS 1359312).

Die als Zwischenprodukte erhaltenen 3,4-Dichlorbutyltriorganyloxysilane der allgemeinen Formel (III), $(RO)_3Si-CH_2-CH_2-CH(Cl)-CH_2-Cl$, können durch einfache Destillation gereinigt werden.

Als letzter Reaktionsschritt erfolgt dann die Enthalogenierung mit gelöstem oder verflüssigtem Natriummetall, bei der Kochsalz gebildet wird.

Diese Reaktions gelingt sowohl bei tiefen Temperaturen in flüssigem Ammoniak als auch bei Temperaturen von von 110 bis 140 °C in Toluol oder Xylol als Reaktionsmedium in beinahe quantitativer Ausbeute.

Natrium und Dichlorbutylsilane der allgemeinen Formel (III) werden im molaren Verhältnis von 2 bis 2,1 zu 1 eingesetzt. Überraschenderweise erfolgt dabei keine Nebenreaktion zwischen dem Natriummetall und Organyloxysilylgruppen.

Für den erfolgreichen Verlauf der Reaktion spielt es keine Rolle, ob die Organosilaneinsatzkomponente (mit Lösungsmittel) vorgelegt wird und flüssiges Natrium zudosiert wird, oder ob die umgekehrte Zugabereihenfolge gewählt wird.

## Beispiele

Alle Umsetzungen werden in Laborstandardapparaturen aus Glas unter Stickstoffatmosphäre durchgeführt.

### Beispiel 1

3,4-Dichlorbutyltrichlorsilan, $Cl_3Si-CH_2-CH_2-CH(Cl)-CH_2-Cl$:

a) Herstellung unter homogener Pt-Katalyse:

596 g Trichlorsilan (4,4 Mol, Überschuß) und 500 g 3,4-Dichlorbuten-1 (4 Mol) werden gemischt. Zu 30 ml dieses Gemisches werden 0,4 g Pt(II)-acetylacetonat gegeben, wobei die Temperatur von selbst allmählich auf 95 °C ansteigt. Bei dieser Temperatur wird im Verlaufe von 4 h das restliche Trichlorsilan/Olefingemisch zudosiert und noch für 0,5 h bei 92 °C nachreagieren gelassen. Überschüssiges Trichlorsilan und andere leichtflüchtige Bestandteile werden im Vakuum abgezogen. Das so erhaltene Rohprodukt (826 g = 79,3 % d.Th.) wird anschließend einer destillativen Reinigung unterzogen. Als Hauptfraktion werden 705 g 3,4-Dichlorbutyltrichlorsilan ≙ 67,7 % d.Th. gewonnen (Stoffdaten vgl. Tabelle 1).

b) Herstellung unter heterogener Pt-Katalyse:

Von einer genau stöchiometrischen Mischung aus 3,4-Dichlorbuten-1 und Trichlorsilan werden pro Stunde 286 ml (1,37 Mol/h) in einen mit einem heterogenen Platinkontakt gefüllten Doppelmanteldurchflußreaktor mit einem Volumen von 750 mm bei einer Manteltemperatur von 65 °C eingespeist.

**Tabelle 1:** Ausgewählte Stoff- und Analysendaten der beschriebenen Silane

| Bezeichnung | Chemische Zusammensetzung | Summenformel | Molekulargewicht | Aussehen | Siedepunkt [°C/mm] |
|---|---|---|---|---|---|
| 3,4-Dichlorbutyltrichlorsilan | $Cl_3Si-CH_2-CH_2-CH(Cl)-CH_2-Cl$ | $C_4H_7Cl_5Si$ | 260,45 | farblose Flüssigkeit | 84/3 [5] * |
| 3,4-Dichlorbutyltrimethoxysilan | $(CH_3O)_3Si-CH_2-CH_2-CH(Cl)-CH_2-Cl$ | $C_7H_{16}Cl_2O_3Si$ | 247,19 | farblose Flüssigkeit | 71/0,3 |
| 3,4-Dichlorbutyltriethoxysilan | $(C_2H_5O)_3Si-CH_2-CH_2-CH(Cl)-CH_2-Cl$ | $C_{10}H_{22}Cl_2O_3Si$ | 289,28 | farblose Flüssigkeit | 90/0,6 |
| 3-Butenyltrimethoxysilan | $(CH_3O)_3Si-CH_2-CH_2-CH=CH_2$ | $C_7H_{16}O_3Si$ | 176,29 | farblose Flüssigkeit | 56/15 |
| 3-Butenyltriethoxysilan | $(C_2H_5O)_3Si-CH_2-CH_2-CH=CH_2$ | $C_{10}H_{22}O_3Si$ | 218,37 | farblose Flüssigkeit | 64/6 |

* M.A. Mamedor et al., Zh. Obshch. Khim. 35, 461; CA 63: 626 g (1965)

**Tabelle 1:** Fortsetzung

| Bezeichnung | Dichte (g/cm³) | Elementaranalysen ber.: gef.: | C (%) | H (%) | Cl (%) | $SiO_2$ (%) |
|---|---|---|---|---|---|---|
| 3,4-Dichlorbutyltrichlorsilan | - | ber. | 18,45 | 2,91 | 68,06 | 23,07 |
| | | gef. | - | - | - | - |
| 3,4-Dichlorbutyltrimethoxysilan | 1,17 | ber. | 34,01 | 6,52 | 28,68 | 24,31 |
| | | gef. | 34,6 | 6,4 | 28,2 | 23,7 |
| 3,4-Dichlorbutyltriethoxysilan | 1,08 | ber. | 41,52 | 7,67 | 24,51 | 20,77 |
| | | gef. | 41,2 | 7,9 | 23,8 | 20,2 |
| 3-Butenyltrimethoxysilan | 0,95 | ber. | 47,69 | 9,15 | - | 34,08 |
| | | gef. | 48,2 | 9,0 | - | - |
| 3-Butenyltriethoxysilan | 0,90 | ber. | 55,00 | 10,15 | - | 27,51 |
| | | gef. | 55,7 | 10,6 | - | - |

Nach 3,5 h Betriebszeit werden 1239,4 g flüssiges Produktgemisch (≙ 99,3 % der erwarteten Menge) erhalten.

Aus dem $^1$H-NMR-Spektrum dieses Produktgemisches ist die folgende Zusammensetzung ableitbar:

86 Mol-% = 91,5 Gew.-% 3,4-Dichlorbutyltrichlorsilan

9 Mol-% = 4,6 Gew.-% 3,4-Dichlorbuten-1

5 Mol-% = 3,9 Gew.-% n-Butyltrichlorsilan

Beispiel 2

3,4-Dichlorbutyltrialkoxysilane, $(RO)_3Si-CH_2-CH_2-CH(Cl)-CH_2-Cl$:

a) Veresterung mit Methanol:

1264,4 g 3,4-Dichlorbutyltrichlorsilan (4,85 Mol) werden im Verlauf von 4 h bei 20 bis 30 °C mit 513,3 g Methanol (16 Mol, Überschuß) versetzt, wobei die Reaktionsmischung zur schnelleren HCl-Entfernung kräftig mit Stickstoff durchströmt wird. Anschließend wird aufgeheizt und für 2 h bei ca. 75 °C gerüht. Man erhält nach dem Abkühlen des Reaktionsgemisches 1142 g Rohprodukt (= 95,3 % d. Th.), aus dem sich durch Destillation 1072 g 0 89,4 % d. Th. gereinigtes Produkt erhalten lassen (Stoffdaten vgl. Tabelle 1, $^1$H-NMR-Spektrum siehe Abbildung 1).

b) Veresterung mit Ethanol:

Analog werden aus 809,6 g 3,4-Dichlorbutylsilan (3,1 Mol) und 472,5 g Ethanol (10,3 Mol, Überschuß) 877,1 g (= 97,5 % d. Th.) Rohsilan und 803,7 g = 89,4 % d. Th. destillativ gereinigtes Silan erhalten (vgl. Tabelle 1)

Beispiel 3

3-Butenyltrialkoxysilane, $(RO)_3Si-CH_2-CH_2-CH = CH_2$

a) Dechlorierung mit Natrium in flüssigem Ammoniak:

In einem 500 ml-Kolben werden 23 g Natrium (1 Mol) vorgelegt und bei -70 °C ca. 150 ml Ammoniak einkondensiert. Zur entstandenen tiefblauen Lösung werden im Verlauf von 1 h bei -55 °C 123,6 g 3,4-Dichlorbutyltrimethoxysilan (0,5 Mol) zugetropft, wobei sich das Reaktionsgemisch zusehends entfärbt. Von der entstandenen, farblosen, dickflüssigen Suspension läßt man den Ammoniak über Nacht abdampfen, versetzt den farblosen Rückstand mit 150 ml n-Pentan, entfernt das NaCl (56,9 g ≙ 97,5 % d.Th.) durch Filtration und erhält nach Abziehen des Lösungsmittels 88,2 g einer farblosen Flüssigkeit entsprechend der erwarteten Menge. Durch Destillation werden daraus 75,7 g ≙ 85,9 % d.Th. des reinen 3-Butenyltrimethoxysilans erhalten (vgl. Tabelle 1)

b) Dechlorierung mit Natrium in Xylol:

115,0 g Natrium (5 Mol) und 1000 ml Xylol werden unter kräftigem Rühren auf 135 °C erwärmt, so daß sich eine Na-Emulsion bildet. Dazu werden bei dieser Temperatur innerhalb von 2,5 h 723,2 g 3,4-Dichlorbutyltriethoxysilan (2,5 Mol) gegeben. Nach einer Nachreaktionszeit von 2 h bei 13 °C wird vom ausgefallenen NaCl (290 g ≙ 99,3 % d. Th.) abfiltriert und das Lösungsmittel abgezogen. Das Rohprodukt (524,8g ≙ 96 % d.Th.) wird durch Destillation gereinigt, wobei die Hauptfraktion mit 437,8 g ≙ 80,2 % d.Th. das gewünschte Produkt ist (vgl. Tabelle 1, $^1$H-NMR-Spektrum siehe Abb. 2).

c) Dechlorierung mit Natrium in siedendem Toluol:

Eine Mischung aus 578,6 g 3,4-Dichlorbutyltriethoxysilan (2,0 Mol) und 750 ml Toluol wird bei Rückflußtemperatur innerhalb von 2 h mit 92,0 g in einem beheizbaren (ca. 130 °C) Tropftrichter aufgeschmolzenem Natrium versetzt. Zur Vervollständigung der Reaktion wird anschließend noch für 30 min bei 120 °C gerührt. Nach der bereits unter b) beschriebenen Aufarbeitung werden 417,3 g rohprodukt = 95,4 % d. Th. erhalten, das bei der anschließenden Vakuumfraktionierung 366,0 g 3-Butenyltriethoxysilan, entsprechend 83,7 % d. Th., als Hauptfraktion liefert.

## Patentansprüche

1. Verfahren zur Herstellung von reinen 3-Butenyltriorganyloxysilanen der allgemeinen Formel

$(RO)_3Si\text{-}CH_2\text{-}CH_2\text{-}CH = CH_2$ (I),

in der bedeutet
R: $C_1$ - $C_8$-Alkyl, Aryl, Aralkyl,
insbesondere $CH_3$,$C_2H_5$, $C_6H_5$,

$C_6H_5\text{-}CH_2\text{-}$,

dadurch gekennzeichnet, daß man
a) 3,4-Dichlorbuten-1 mit Trichlorsilan hydrosilyliert, das entstandene 3,4-Dichlorbutyltrichlorsilan abdestilliert,
b) diese Verbindung mit einem Alkohol der allgemeinen Formel ROH(II), in der R die oben angegebene Bedeutung hat, verestert,
c) das erhaltene 3,4-Dichlorbutyltriorganyloxysilan nach der destillativen Reinigung mit Natriummetall dehalogeniert und
d) das Produkt gemäß Formel (I) isoliert.

## Claims

1. Process for the production of pure 3-butenyltriorganyloxysilanes of the general formula

$(RO)_3Si\text{-}CH_2\text{-}CH_2\text{-}CH=CH_2$ (I),

in which
R means $C_1$-$C_8$ alkyl, aryl, aralkyl, in particular $CH_3$, $C_2H_5$, $C_6H_5$, $C_6H_5\text{-}CH_2\text{-}$,
characterised in that
a) 3,4-dichloro-1-butene is hydrolysed with trichlorosilane, the resultant 3,4-dichlorobutyltrichlorosilane is distilled off,
b) this compound is esterified with an alcohol of the general formula ROH(II), in which R has the above-stated meaning,
c) after purification by distillation, the resultant 3,4-dichlorobutyltriorganyloxysilane is dehalogenated with sodium metal and
d) the product according to the formula (I) is isolated.

## Revendications

1. Procédé de fabrication de 3-buténylriorganyloxysilanes purs de formule générale :

$(RO)_3Si\text{-}CH_2\text{-}CH_2\text{-}CH=CH_2$ (I)

dans laquelle R signifie un alcoyle en $C_1$ à $C_8$, un aryle, un aralcoyle, en particulier $CH_3$,$C_2H_5$, $C_6H_5$, $C_6H_5\text{-}CH_2\text{-}$,
caractérisé en ce que,
a) l'on hydrosilyle le 3,4-dichlorobutène-1 avec le trichlorosilane et l'on sépare par distillation le 3,4-dichlorobutyltrichlorosilane formé,
b) l'on estérifie ce composé avec un alcool de formule générale ROH (II) dans laquelle R a la signification indiquée ci-dessus,
c) on deshalogène le 3,4-dichlorobutyltriorganyloxysilane obtenu après la purification par distillation, avec du sodium métal, et
d) on isole le produit selon la formule (I).

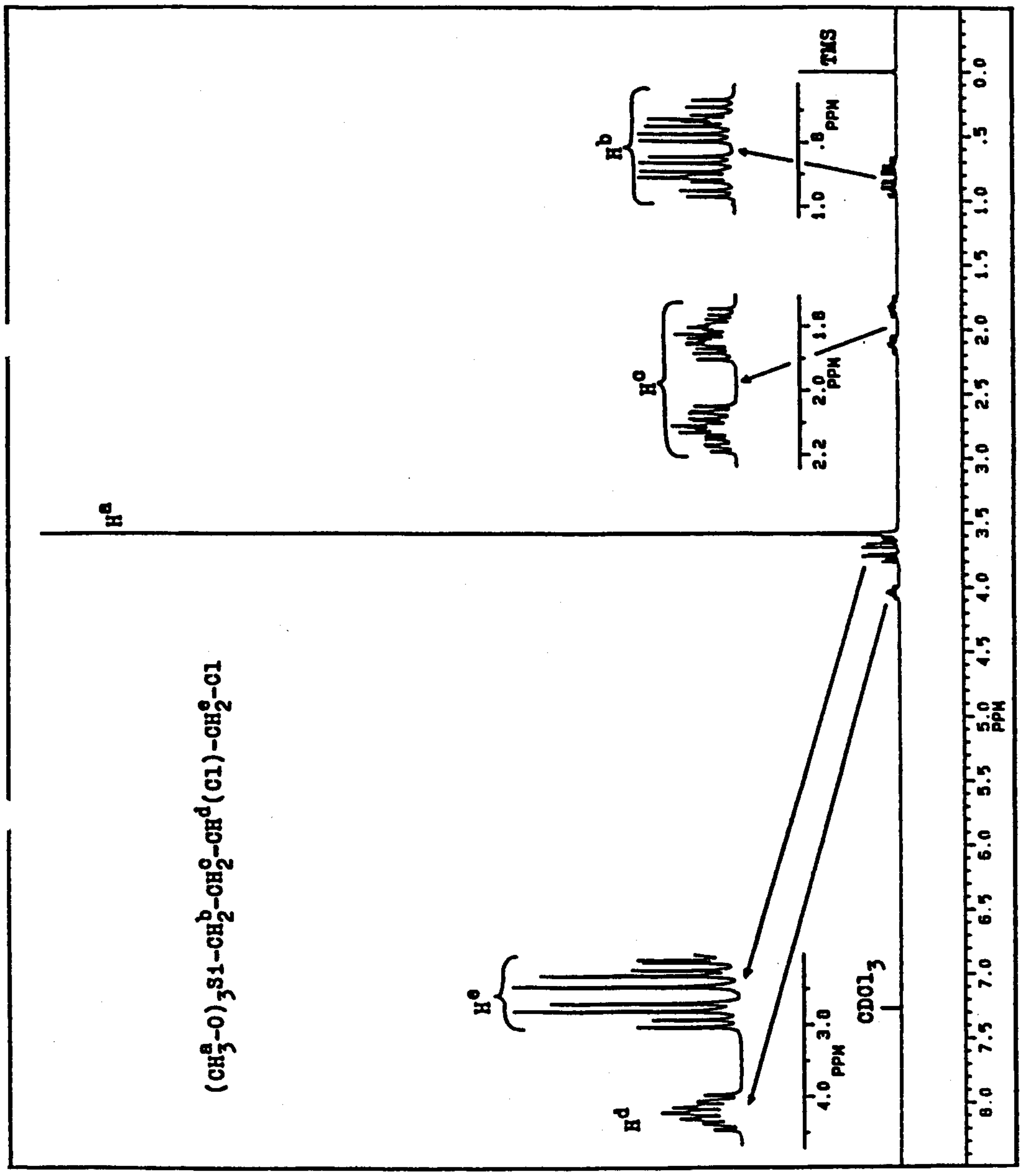


Abbildung 1: $^1$H-NMR-Spektrum (250 MHz) von 3,4-Dichlorbutyltrimethoxysilan

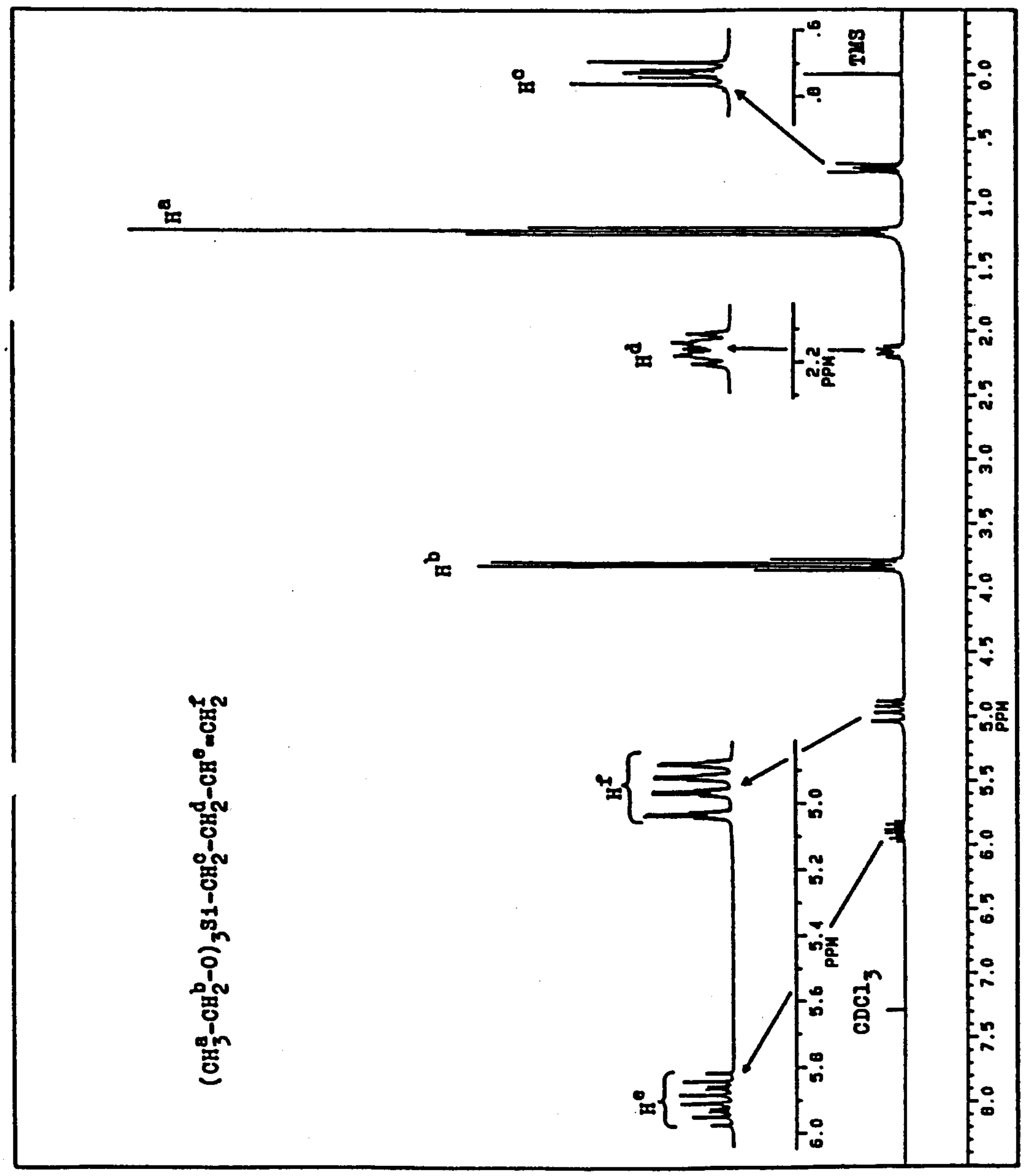


Abbildung 2: $^1$H-NMR-Spektrum (250 MHz) von 3-Butenyltriethoxysilan